# EUROPÄISCHE PATENTSCHRIFT

(11) **EP 1 000 286 B1**
(45) Veröffentlichungstag und Bekanntmachung des Hinweises auf die Patenterteilung: **19.02.2003**
(21) Anmeldenummer: 98946271.8
(22) Anmeldetag: 03.08.1998
(51) Int. Cl.: F16L 37/05, F16L 37/12, G01M 3/02

(54) **SCHNELLANSCHLUSS, INSBESONDERE FÜR GLATTROHRE**
QUICK-ACTION COUPLING, ESPECIALLY FOR PLAIN END PIPES
RACCORD RAPIDE, EN PARTICULIER POUR TUBES LISSES

(30) Priorität: 02.08.1997 DE 29713794 U
(43) Veröffentlichungstag der Anmeldung: 17.05.2000
(73) Patentinhaber: Weh, Erwin, D-89257 Illertissen (DE); WEH, Wolfgang, D-89257 Illertissen (DE)
(72) Erfinder: Weh, Erwin, D-89257 Illertissen (DE); WEH, Wolfgang, D-89257 Illertissen (DE)
(74) Vertreter: Fiener, Josef
(86) Internationale Anmeldenummer: EP9804829
(87) Internationale Veröffentlichungsnummer: WO99006752

(56) Entgegenhaltungen:
- US-A- 3 499 469
- US-A- 3 868 132
- US-A- 3 962 769
- US-A- 4 540 201

## Beschreibung

Die Erfindung betrifft einen Schnellanschluß, insbesondere für Glattrohre zur hydraulischen oder pneumatischen Druck- oder Vakuumprüfung, gemäß den oberbegrifflichen Merkmalen des Anspruches 1.

Derartige Schnellanschlüsse sind aus der US-A-3,962,769 bekannt und werden beispielsweise für die Druckprüfung von Wärmetauscherrohren an Heizanlagen oder Kühlanlagen verwendet. Hierbei wird der Schnellanschluß an dem offenen Ende eines Rohres außenseitig oder innenseitig angesetzt, wobei im allgemeinen ein Verbindungselement, insbesondere in Stopfenform in Radialrichtung spreizbar ist, so daß der Schnellanschluß kraftschlüssig durch Reibung an der Innen- bzw. Außenwand des Rohres angreift. Das Verbindungselement kann auch in Form einer außenumgreifenden, geschlitzten Hülse ausgebildet sein. Durch eine Betätigungseinrichtung wird dann dieses Verbindungselement in radialer Richtung geringfügig zusammengespreizt oder aufgespreizt, so daß ein Kraftschluß zwischen der Rohrwandung und dem Gehäuse des Schnellanschlusses hergestellt ist.

Ein derartiger Schnellanschluß soll hierbei eine besonders einfache Ankoppelungsmöglichkeit bieten, da in der Serienfertigung eine Vielzahl derartiger Glattrohre überprüft werden müssen. Zudem soll die Anschlußkraft besonders hoch sein, so daß die Prüfung auch mit höheren Drücken im Bereich von ca. 50 bar oder mehr sicher durchgeführt werden kann.

Demzufolge liegt der Erfindung die Aufgabe zugrunde, einen Schnellanschluß hinsichtlich Bedienbarkeit und Haltekraft weiter zu verbessern.

Diese Aufgabe wird gelöst durch einen Schnellanschluß gemäß den Merkmalen des Anspruches 1.

Bevorzugte Ausgestaltungen sind Gegenstand der abhängigen Ansprüche.

Durch die vorgeschlagene Ausbildung des Schnellanschlusses mit einer Betätigungseinrichtung in Form eines Handhebels, der bevorzugt am vorderen Ende des Schnellanschlusses gelagert ist, kann eine große Hebellänge zur Gegenbeaufschlagung einer Druckfeder geschaffen werden. Hierbei weist der Handhebel einen Betätigungsstößel auf, der durch die Außenwandung des Gehäuses in einem Winkel von ca. 45° zum Kolben hindurchgeführt ist. Hierdurch ist ein günstiger Kraftfluß beim Abkuppeln des Schnellanschlusses erreichbar, wobei in dem Gehäuse ein von der Betätigungseinrichtung axial verschiebbarer Kolben geführt ist und sich eine besonders einfache Bauweise des Schnellanschlusses ergibt. Durch die Beaufschlagung des Kolbens durch die Druckfeder zur Anschlußstellung hin wird zudem die Haltekraft des Schnellanschlusses erhöht, da sehr starke Druckfedern eingebaut werden können, die dann das Verbindungselement mit einer entsprechend hohen Spreizkraft beaufschlagen.

In bevorzugter Ausführung ist in dem Gehäuse des Schnellanschlusses zwischen dem Kolben und dem Verbindungselement ein Spreizkolben zwischengeschaltet, der mittels einer Ring-Keilfläche das Verbindungselement (in der Ausführung als Innen- oder als Außenanschluß und durch eine Hülse schnell auf den jeweiligen Rohrdurchmesser austauschbar) mit einer hohen Spreizkraft beaufschlagt. Zudem bietet dieser zwischengeschaltete Spreizkolben den besonderen Vorteil, daß an der von dem Rohr abgewandten Stirnseite eine durchmessergrößere Ring-Kolbenfläche vorgesehen sein kann. Hierdurch wird eine zusätzliche Anpreßkraft auf das Verbindungselement geschaffen, so daß mit steigendem Fluiddruck (Prüfdruck) der Spreizkolben in Richtung auf das Verbindungselement gedrückt wird und die Haltekraft des Reibschlusses proportional mit dem Prüfdruck erhöht wird.

Nachfolgend werden zwei Ausführungsbeispiele des Schnellanschlusses anhand der Zeichnungen näher erläutert und beschrieben. Hierbei zeigen:
- Fig. 1: einen Schnellanschluß zum außenseitigen Ankuppeln an ein Glattrohr in einer Halbschnitt-Darstellung; und
- Fig. 2: eine abgewandelte Ausführungsform des Schnellanschlusses gemäß Fig. 1.

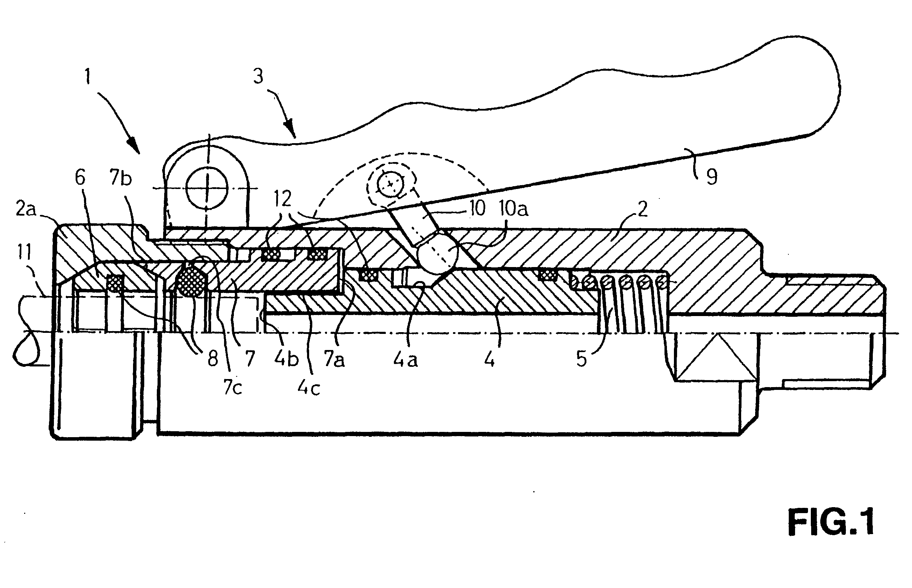

In Fig. 1 ist im Halbschnitt ein Schnellanschluß 1 dargestellt, der als Bestandteile ein rohrförmiges Gehäuse 2 und eine Betätigungseinrichtung 3 aufweist. Das Gehäuse 2 ist hier an der rechten Seite mit einem Gewindeanschluß versehen, an dem Prüfmedium mittels eines Schlauches angeschlossen werden kann. An der hier linken Seite wird, wie strichliert angedeutet, ein Glattrohr 11 eingesteckt bzw. der Schnellanschluß 1 auf dieses Glattrohr 11 aufgesteckt. An dieser hier linken Seite ist als Bestandteil des Gehäuses 2 eine Schraub-Hülse 2a vorgesehen, in der ein Verbindungselement 6 gelagert ist. Diese Ausbildung als bevorzugt an das Gehäuse 2 ein- oder angeschraubte Hülse 2a dient hierzu, das Verbindungselement 6 in Anpassung an den jeweiligen Rohrdurchmesser des Glattrohres 11 schnell austauschen und montieren zu können.

Im Inneren des Gehäuses 2 ist ein axial verschiebbarer Kolben 4 gelagert und an der Innenwandfläche des Gehäuses 2 geführt. Hierbei ist der Kolben 4 von einer relativ starken Druckfeder 5 zur Anschlußstellung bzw. zum Glattrohr 11 hin beaufschlagt. Dabei wird das Verbindungselement 6 durch eine Ring-Keilfläche 7b (und bevorzugt zugleich durch eine symmetrisch ausgebildete Innenkonus-Fläche in der Hülse 2a) zusammengespreizt. Diese Ring-Keilfläche 7b kann hierbei auch am vorderen Ende des Kolbens 4 ausgebildet sein. Weiterhin ist die Stirnseite des Kolbens zugleich als Anschlagfläche 4b für das eingesteckte Glattrohr 11 ausgebildet.

In bevorzugter Ausführung wird jedoch eine zweiteilige Bauweise gewählt, nämlich indem an dem vorderen Ende des Kolbens 4 ein Spreizkolben 7 aufgesetzt ist. Dies ermöglicht insbesondere die Ausführung aus unterschiedlichen Materialien, beispielsweise indem für die reibbelastete Ring-Keilfläche 7b gehärteter Stahl verwendet wird, während für den Kolben 4 ein Material geringerer Verschleißfestigkeit ausreicht.

Wesentlich ist hierbei an dem Spreizkolben 7 eine Ring-Kolbenfläche 7a, die für das Prüfmedium (Fluid) durch einen Ringspalt 4c zwischen dem Spreizkolben 7 und dem Kolben 4 zugänglich ist. Hierdurch wird der Spreizkolben 7 proportional zu dem anliegendem Druck nach vorne zum Verbindungselement 6 hin gedrückt, also mit höherem Prüfdruck eine höhere Anpreßkraft auf das Verbindungselement 6 ausgeübt, so daß zugleich dessen Haltekraft auf dem Glattrohr 11 in etwa proportional ansteigt. Es sei darauf hingewiesen, daß anstatt der hier gezeigten Außenumklammerung des Glattrohres 11 auch eine entsprechende innenseitige Verbindung verwirklicht werden kann, wobei ein aufspreizbares Verbindungselement als Stopfen von innen an der Rohrwandung angreift. In diesem Falle wäre die Ring-Keilfläche 7b zur Zentralachse spiegelbildlich angeordnet, um dann den Verbindungsstopfen 6 von innen in der Anschlußstellung aufzuspreizen.

In der Anschlußstellung wird das hier gezeigte hülsenförmige Verbindungselement 6 in der hier gezeigten Außen-Ausführung zusammengespreizt, wobei auch ein darin eingesetzter Dichtring 8 in Anlage zu dem Glattrohr 11 gelangt. Ein ähnlicher Dichtring 8 ist auch am Spreizkolben 7 in einem Anlagebereich 7c zur Erhöhung der Abdichtwirkung vorgesehen. Es sei darauf hingewiesen, daß das hier ringförmig ausgebildete Verbindungselement 6 auch gegenüber der Schraubhülse 2a eine Kegelfläche aufweist, so daß die Beaufschlagung zum radialen Zusammenspreizen symmetrisch erfolgt.

Die Betätigungseinrichtung 3 ist hier am Außenumfang des Gehäuses 2 gelagert und durch einen Handhebel 9 gebildet. Der Handhebel 9 ist hierbei soweit wie möglich am vorderen (hier linken) Ende des Gehäuses 2 gelagert, damit dessen Hebellänge möglichst groß sein kann, um somit bei einer entsprechend hohen Federkraft der Druckfeder 5 eine leichte Betätigung zu ermöglichen.

Innerhalb des Handhebels 9 ist ein Betätigungsstößel 10 gelagert, der durch die Außenwandung des Gehäuses 2 hindurchgeführt ist. Das innere Ende des Betätigungsstößels 10, das bevorzugt in einem Kugelprofil 10a ausgebildet ist, greift hierbei in eine Umfangsnut 4a des Kolbens 4 ein und drückt somit den Kolben 4 entgegen der Druckfeder 5 nach rechts, wenn der Handhebel 9 zum Gehäuse 2 hin gezogen wird.

Es sei darauf hingewiesen, daß aufgrund dieser Ausbildung der Kolben 4 unabhängig axial verschiebbar ist, so daß hierbei der Spreizkolben 7 durch die Ring-Kolbenfläche 7a in der Haltestellung verbleibt. Erst wenn der Druck innerhalb des Gehäuses 2 abgebaut ist, kann der Spreizkolben 7 hier nach rechts verschoben werden, um somit die Spreizstellung des Verbindungselements 6 auf dem Glattrohr 11 zu lösen. Hierdurch wird eine besonders hohe Sicherheit des Schnellanschlusses 1 erreicht.

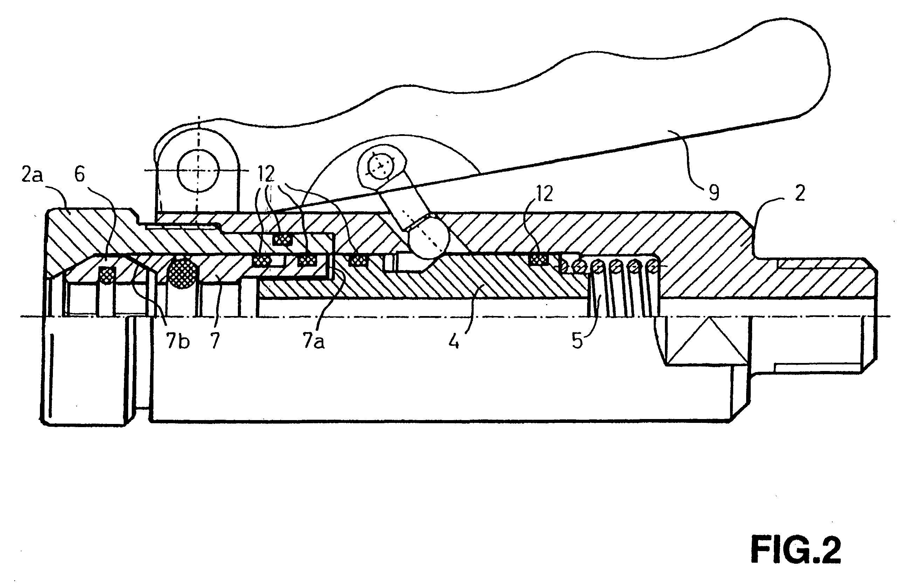

Es sei darauf hingewiesen, daß der Kolben 4 und auch der Spreizkolben 7 außenseitig mit Dichtungen 12 abgedichtet ist. In der abgewandelten Ausführungsform gemäß Fig. 2 ist dabei die Schraubhülse 2a länger ausgeführt und weist einen weiteren äußeren Dichtring 12 auf, um hier den Druckraum an der Ring-Kolbenfläche 7a besonders zuverlässig abzudichten. Die weiteren Bauteile sind mit der Ausführungsform gemäß Fig. 1 identisch und daher mit den gleichen Bezugszeichen versehen.

Im weiteren Unterschied zu der Ausführung gemäß Fig. 1 weist die Ausführung gemäß Fig. 2 jedoch eine etwas kleinere Ring-Kolbenfläche 7b auf, so daß hier die Zusammenspreizkraft für das Verbindungselement 6 gegenüber des Ausführung in Fig. 1 geringer ist. Es ergibt sich hier jedoch eine größere Führungslänge des Spreizkolbens 7 bei besonders kompakter Bauweise des Schnellanschlusses 1.

Insgesamt ergibt sich somit ein besonders einfach zu bedienender Schnellanschluß 1 mit einfacher, kompakter Bauweise und besonders hoher Haltekraft an dem Gegenanschluß in Form eines Glattrohres. Es sei darauf hingewiesen, daß unter dem Begriff Glattrohr hier auch aufgebördelte Enden von Rohren oder Leitungen verstanden werden soll, beispielsweise die übliche Bauweise bei Bremsleitungen oder bei Hydraulikleitungen, die mittels des Schnellanschlusses 1 ebenfalls besonders einfach auf ihre Dichtheit überprüft werden können.

## Patentansprüche

1. Schnellanschluß, insbesondere für Glattrohre zur hydraulischen oder pneumatischen Druck- oder Vakuumprüfung, mit einem innenseitig einsetzbaren oder außenseitig ansetzbaren, hülsenförmigen Verbindungselement (6), das in oder an einem rohrförmigen Gehäuse (2) gelagert und mittels einer Betätigungseihrichtung (3) in Radialrichtung spreizbar ist, wobei in dem Gehäuse (2) ein von der Betätigungseinrichtung (3) axial verschiebbarer Kolben (4) geführt ist, der von einer Druckfeder (5) zur Anschlußstellung hin beaufschlagt ist, und die Betätigungseinrichtung (3) durch einen in Axialrichtung des Gehäuses (2) verlaufenden Handhebel (9) gebildet ist,
**dadurch gekennzeichnet, daß**
der Handhebel (9) einen Betätigungsstößel (10) aufweist, der durch eine Außenwandung des Gehäuses (2) hindurchgeführt ist und in einem Winkel von etwa 45° zum Kolben (4) hin ausgerichtet ist.

2. Schnellanschluß nach Anspruch 1,
**dadurch gekennzeichnet, daß**
der Kolben (4) unmittelbar mit dem geschlitzt ausgebildeten Verbindungselement (6) in Eingriff steht.

3. Schnellanschluß nach Anspruch 1,
**dadurch gekennzeichnet, daß**
der Kolben (4) auf einen zwischengeschalteten Spreizkolben (7) wirkt, der mit dem axial geschlitzten Verbindungselement (6) in Eingriff steht.

4. Schnellanschluß nach Anspruch 3,
**dadurch gekennzeichnet, daß**
der Spreizkolben (7) im Gehäuse (2) und/oder auf dem Kolben (4) abgedichtet geführt ist.

5. Schnellanschluß nach Anspruch 3 oder 4,
**dadurch gekennzeichnet, daß**
der Spreizkolben (7) an der von dem Verbindungselement (6) abgewandten Stirnseite eine demgegenüber durchmessergrößere Ring-Kolbenfläche (7a) aufweist.

6. Schnellanschluß nach einem der Ansprüche 1 bis 5,
**dadurch gekennzeichnet, daß**
das Verbindungselement (6) von einer Ring-Keilfläche (7b) spreizbar ist und in einer Hülse (2a) gelagert ist.

7. Schnellanschluß nach einem der Ansprüche 1 bis 6,
**dadurch gekennzeichnet, daß**
am Verbindungselement (6) und/oder Spreizkolben (7) ein Dichtring (8) zum Glattrohr (11) hin angeordnet ist.

8. Schnellanschluß nach Anspruch 7,
**dadurch gekennzeichnet, daß**
der Handhebel (9) am zum Glattrohr (11) hin weisenden Ende des Gehäuses (2) gelagert ist.

9. Schnellanschluß nach einem der Anspruche 1 bis 8,
**dadurch gekennzeichnet, daß**
der Betätigungsstößel (10) an seinem inneren Ende ein abgerundetes Profil (10a) aufweist, das mit einer Umfangsnut (4a) des Kolbens (4) in Eingriff steht.

10. Schnellanschluß nach einem der Ansprüche 1 bis 9,
**dadurch gekennzeichnet, daß**
eine Stirnseite des Kolbens (4) als Anschlagfläche (4b) für das Glattrohr (11) ausgebildet ist.

## Claims

1. A quick-action coupling, especially for plain end pipes for hydraulic or pneumatic pressure or vacuum testing, with a connecting element (6) of sleeve form, which can be fitted inside or on the outside and which is mounted in or on a tubular housing (2) and can be splayed in the radial direction by means of an actuating device (3), wherein a piston (4) which can be moved axially by the actuating device (3) is guided in the housing (2) and is biased into the connected position by a compression spring (5) and the actuating device (3) is formed by a hand lever (9) running in the axial direction of the housing (2),
**characterized in that**
the hand lever (9) has an actuating push rod (10) which is passed through an outer wall of the housing (2) and is disposed at an angle of about 45° to the piston (4).

2. A quick-action coupling according to claim 1, **characterized in that** the piston (4) is in direct engagement with the connecting element (6) of slotted form.

3. A quick-action coupling according to claim 1, **characterized in that** the piston (4) acts on an intermediate splaying piston (7), which is in engagement with the axially slotted connecting element (6).

4. A quick-action coupling according to claim 3, **characterized in that** the splaying piston (7) is guided in sealed manner in the housing (2) and/or on the piston (4).

5. A quick-action coupling according to claim 3 or 4, **characterized in that** the splaying piston (7) has an annular piston surface (7a) on the end face thereof facing away from the connecting element (6) and of greater diameter than this.

6. A quick-action coupling according to any of claims 1 to 5, **characterized in that** the connecting element (6) can be splayed by an annular wedge surface (7b) and is mounted in a sleeve (2a).

7. A quick-action coupling according to any of claims 1 to 6, **characterized in that** a sealing ring (8) is arranged on the connecting element (6) and/or the splaying piston (7) toward the plain end pipe (11).

8. A quick-action coupling according to claim 7, **characterized in that** the hand lever (9) is mounted on the end of the housing (2) facing towards the plain end pipe (11).

9. A quick-action coupling according to any of claims 1 to 8, **characterized in that** the actuating push rod (10) has a rounded profile (10a) at its inner end, which is in engagement with a peripheral groove (4a) of the piston (4).

10. A quick-action coupling according to any of claims 1 to 9, **characterized in that** an end face of the piston (4) is formed as a stop surface (4b) for the plain end pipe (11).

## Revendications

1. Raccord rapide, en particulier pour tubes lisses, utilisé pour un contrôle sous vide ou sous pression hydraulique ou pneumatique, comprenant un élément d'assemblage (6) en forme de douille, à enficher sur la face intérieure ou à emmancher sur la face extérieure, lequel est logé dans ou au niveau d'un corps (2) tubulaire et peut être écarté dans le sens radial au moyen d'un dispositif de commande (3), un piston (4), pouvant être déplacé dans le sens axial par le dispositif de commande (3), étant logé dans le corps (2) et étant sollicité par un ressort de pression (5) vers la position de raccordement, et le dispositif de commande (3) étant formé par un levier à main (9) qui s'étend dans le sens axial du corps (2), **caractérisé en ce que** le levier à main (9) est muni d'un poussoir de commande (10), qui passe à travers une paroi extérieure du corps (2) et est orienté selon un angle de 45° environ par rapport au piston (4).

2. Raccord rapide selon la revendication 1, **caractérisé en ce que** le piston (4) est directement en prise avec l'élément d'assemblage (6) fendu.

3. Raccord rapide selon la revendication 1, **caractérisé en ce que** le piston (4) agit sur un piston expansible (7) intercalé, qui est en prise avec l'élément d'assemblage (6) fendu dans le sens axial.

4. Raccord rapide selon la revendication 3, **caractérisé en ce que** le piston expansible (7) est guidé dans le corps (2) et/ou sur le piston (4), de manière étanche.

5. Raccord rapide selon la revendication 3 ou 4, **caractérisé en ce que** le piston expansible (7), sur la face frontale opposée à l'élément d'assemblage (6), comporte une surface annulaire (7a) de plus grand diamètre.

6. Raccord rapide selon une des revendications 1 à 5, **caractérisé en ce que** l'élément d'assemblage (6) peut être écarté par une surface conique annulaire (7b) et est logé dans une douille (2a).

7. Raccord rapide selon une des revendications 1 à 6, **caractérisé en ce qu'**une bague d'étanchéité (8) par rapport au tube lisse (11) est posée sur l'élément d'assemblage (6) et/ou le piston expansible (7).

8. Raccord rapide selon la revendication 7, **caractérisé en ce que** le levier à main (9) est logé au niveau de l'extrémité du corps (2) orientée vers le tube lisse (11).

9. Raccord rapide selon une des revendications 1 à 8, **caractérisé en ce que** l'extrémité intérieure du poussoir de commande (10) est réalisée avec un profil sphérique (10a), qui entre en prise avec une rainure périphérique (4a) du piston (4).

10. Raccord rapide selon une des revendications 1 à 9, **caractérisé en ce qu'**une face frontale du piston (4) est conçue sous forme de surface de butée (4b) pour le tube lisse (11).
